# EUROPÄISCHE PATENTSCHRIFT

(11) **EP 1 598 250 B1**
(45) Veröffentlichungstag und Bekanntmachung des Hinweises auf die Patenterteilung: **30.01.2008**
(21) Anmeldenummer: 05009928.2
(22) Anmeldetag: 06.05.2005
(51) Int. Cl.: B60T 11/18, G05G 25/02, F16F 1/38, F16F 1/373

(54) **Kolbenstange für einen Zylinder**
Piston rod for a cylinder
Tige de piston pour un cylindre

(30) Priorität: 19.05.2004 DE 102004024699
(43) Veröffentlichungstag der Anmeldung: 23.11.2005
(73) Patentinhaber: LuK Lamellen und Kupplungsbau Beteiligungs KG, 77815 Bühl (DE)
(72) Erfinder: Frietsch, Frank, Lauf Lauf (DE); Hahn, Henry, 77815 Bühl (DE); Panther, Urban, 77960 Seelbach (DE); Welter, Roland, Dr., 77815 Bühl (DE)

(56) Entgegenhaltungen:
- DE-A1- 10 049 913
- US-A- 3 250 144
- US-A- 5 996 468

## Beschreibung

Die Erfindung betrifft eine Kolbenstange für einen Zylinder, insbesondere einen Kupplungsgeberzylinder eines Kraftfahrzeugs, in welchem ein Kolben hin und her bewegbar aufgenommen ist, an dem ein Ende der Kolbenstange angebracht ist, an deren anderem Ende unter Zwischenschaltung einer Schwingungsdämpfungseinrichtung, insbesondere einer Dämpferscheibe, mindestens eine Befestigungseinrichtung vorgesehen ist, die in Längsrichtung und relativ zu der Kolbenstange bewegbar ist und dazu dient, eine Betätigungseinrichtung, insbesondere ein Kupplungspedal, an die Kolbenstange anzubinden. Eine derartige Kolbenstange ist aus dem US-Patent 5,996,468 A1 bekannt.

Im Betrieb eines Kraftfahrzeugs mit einer Brennkraftmaschine können, verursacht durch die Verbrennung in der Brennkraftmaschine, Axialschwingungen auftreten, die von der Brennkraftmaschine über eine Reibungskupplung und deren Membranfeder auf das Kupplungsausrücklager und die damit verbundenen Ausrückeinrichtungen übertragen werden können. Diese Axialschwingungen können sich im gesamten hydraulischen Ausrücksystem fortsetzen und ein unangenehmes Kribbeln bei der Berührung des Kupplungspedals auslösen. Die Schwingungsdämpfungseinrichtung dient dazu, eine Übertragung der Axialschwingungen von der Brennkraftmaschine auf das Kupplungspedal zu unterbinden.

Aufgabe der Erfindung ist es, die Lebensdauer einer Kolbenstange für einen Zylinder, insbesondere einen Kupplungsgeberzylinder eines Kraftfahrzeugs, in welchem ein Kolben hin und her bewegbar aufgenommen ist, an dem ein Ende der Kolbenstange angebracht ist, an deren anderem Ende unter Zwischenschaltung einer Schwingungsdämpfungseinrichtung, insbesondere einer Dämpferscheibe, mindestens eine Befestigungseinrichtung vorgesehen ist, die in Längsrichtung und relativ zu der Kolbenstange bewegbar ist und dazu dient, eine Betätigungseinrichtung, insbesondere ein Kupplungspedal, an die Kolbenstange anzubinden, zu verlängern.

Die Aufgabe wird bei einer Kolbenstange für einen Zylinder, insbesondere einen Kupplungsgeberzylinder eines Kraftfahrzeugs, in welchem ein Kolben hin und her bewegbar aufgenommen ist, an dem ein Ende der Kolbenstange angebracht ist, an deren anderem Ende unter Zwischenschaltung einer Schwingungsdämpfungseinrichtung, insbesondere einer Dämpferscheibe, mindestens eine Befestigungseinrichtung vorgesehen ist, die in Längsrichtung und relativ zu der Kolbenstange bewegbar ist und dazu dient, eine Betätigungseinrichtung, insbesondere ein Kupplungspedal an die Kolbenstange anzubinden, dadurch gelöst, dass die Befestigungseinrichtung durch eine Führungseinrichtung in Längsrichtung der Kolbenstange hin und her bewegbar geführt ist. Im Rahmen der vorliegenden Erfindung wurde herausgefunden, dass im Bereich der Dämpfungseinrichtung ein unerwünschtes Knicken zwischen der Befestigungseinrichtung und der Kolbenstange auftreten kann, wodurch der Verschleiß erhöht wird. Durch die erfindungsgemäße Führungseinrichtung wird ein Abknicken der Kolbenstange von der Befestigungseinrichtung und umgekehrt sicher verhindert. Die Führungseinrichtung kann zum Beispiel von einer Führungshülse gebildet werden, in der ein Ende der Kolbenstange und ein Ende der Befestigungseinrichtung geführt ist.

Ein bevorzugtes Ausführungsbeispiel der Kolbenstange ist dadurch gekennzeichnet, dass die Führungseinrichtung einen Führungsstift umfasst, der sich durch die Dämpfungseinrichtung hindurch erstreckt. Die Dämpfungseinrichtung hat vorzugsweise die Gestalt einer Kreisringscheibe mit einem zentralen Durchgangsloch für den Führungsstift. Der Führungsstift kann als separates Bauteil ausgebildet sein, dessen eines Ende in einem Sackloch an dem freien Ende der Kolbenstange geführt ist und dessen anderes Ende in einem Sackloch in der Betätigungseinrichtung geführt ist. Der Führungsstift kann aber auch an der Kolbenstange oder an der Betätigungseihrichtung befestigt sein. Der Führungsstift kann auch einstückig mit der Kolbenstange oder mit der Befestigungseinrichtung ausgebildet sein.

Ein weiteres bevorzugtes Ausführungsbeispiel der Kolbenstange ist dadurch gekennzeichnet, dass der Führungsstift einen kreisrunden Querschnitt aufweist. Der Führungsstift kann aber auch einen ovalen oder eckigen Querschnitt aufweisen. Der Führungsstift dient dazu, die Befestigungseinrichtung in axialer Richtung relativ zu der Kolbenstange zu führen.

Ein weiteres bevorzugtes Ausführungsbeispiel der Kolbenstange ist dadurch gekennzeichnet, dass der Führungsstift an der Befestigungseinrichtung angebracht und mit seinem freien Ende in einem zentralen Führungsloch geführt ist, das in der Kolbenstange vorgesehen ist. Der Führungsstift kann einstückig mit der Befestigungseinrichtung ausgebildet sein. Der Führungsstift kann aber auch mit Hilfe einer Schraubverbindung an der Befestigungseinrichtung angebracht sein. Die Befestigungseinrichtung wird auch als Kolbenstangenauge bezeichnet. Das Führungsloch erstreckt sich, bezogen auf die Kolbenstange, in axialer Richtung.

Ein weiteres bevorzugtes Ausführungsbeispiel der Kolbenstange ist dadurch gekennzeichnet, dass der Führungsstift an der Kolbenstange angebracht und mit seinem freien Ende in einem zentralen Führungsloch geführt ist, das in der Befestigungseinrichtung vorgesehen ist. Der Führungsstift kann einstückig mit der Kolbenstange ausgebildet sein. Der Führungsstift kann aber auch mit Hilfe einer Schraubverbindung an der Kolbenstange angebracht sein.

Ein weiteres bevorzugtes Ausführungsbeispiel der Kolbenstange ist dadurch gekennzeichnet, dass in dem freien Ende der Kolbenstange ein zentrales Führungsloch ausgespart ist, in welchem ein Ende des Führungsstifts geführt ist, dessen anderes Ende in einem zentralen Führungsloch geführt ist, das in der Befestigungseinrichtung ausgespart ist. Der Querschnitt der Führungslöcher ist vorzugsweise komplementär zu dem Querschnitt des Führungsstifts ausgebildet. Die Führungslöcher erstrecken sich entlang der Längsachse der Kolbenstange. Vorzugsweise ist der Führungsstift aus Stahl gebildet.

Ein weiteres bevorzugtes Ausführungsbeispiel der Kolbenstange ist dadurch gekennzeichnet, dass die Dämpfungseinrichtung in einem Dämpfungseinrichtungsgehäuse angeordnet ist, das dazu dient, die Befestigungseinrichtung an der Kolbenstange so anzubringen, dass eine Relativbewegung zwischen der Kolbenstange und der Befestigungseinrichtung in axialer Richtung möglich ist. Das Dämpfungseinrichtungsgehäuse kapselt sowohl die Dämpfungseinrichtung als auch die Führungseinrichtung nach außen hin ab. Die Relativbewegung zwischen Kolbenstange und Befestigungseinrichtung ist nötig, damit die Dämpfungseinrichtung ihre Wirkung entfalten kann.

Ein weiteres bevorzugtes Ausführungsbeispiel der Kolbenstange ist dadurch gekennzeichnet, dass die Befestigungseinrichtung mit Hilfe einer Schnappverbindung, die teilweise an dem Dämpfungseinrichtungsgehäuse ausgebildet ist, an der Kolbenstange befestigt ist. Die Schnappverbindung liefert den Vorteil, dass sie eine Relativbewegung zwischen Kolbenstange und Befestigungseinrichtung zulässt. Außerdem erleichtert die Schnappverbindung die Montage der Befestigungseinrichtung an der Kolbenstange.

Ein weiteres bevorzugtes Ausführungsbeispiel der Kolbenstange ist dadurch gekennzeichnet, dass das Dämpfungseinrichtungsgehäuse von der Befestigungseinrichtung ausgeht und im Wesentlichen die Gestalt eines Kreiszylindermantels aufweist, der einen Bund umgreift, der von der Kolbenstange ausgeht. Dadurch kann die Anzahl der benötigten Einzelteile klein gehalten werden.

Ein weiteres bevorzugtes Ausführungsbeispiel der Kolbenstange ist dadurch gekennzeichnet, dass die Befestigungseinrichtung mit Hilfe einer Schraubverbindung an der Kolbenstange befestigt ist. Dadurch wird auf einfache Art und Weise eine lösbare Befestigung der Befestigungseinrichtung an der Kolbenstange ermöglicht. Außerdem ermöglicht die Schraubverbindung ein Verstellen des Abstands der Befestigungseinrichtung von dem Ende der Kolbenstange.

Bei einem Zylinder, insbesondere einem Kupplungsgeberzylinder eines Kraftfahrzeugs, in welchem ein Kolben hin und her bewegbar aufgenommen ist, an dem ein Ende einer Kolbenstange angebracht ist, an deren anderem Ende unter Zwischenschaltung einer Schwingungsdämpfungseinrichtung, insbesondere einer Dämpferscheibe, mindestens eine Befestigungseinrichtung vorgesehen ist, die in Längsrichtung und relativ zu der Kolbenstange bewegbar ist und dazu dient, eine Betätigungseinrichtung, insbesondere ein Kupplungspedal, an die Kolbenstange anzubinden, ist die oben angegebene Aufgabe durch eine vorab beschriebene Kolbenstange gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Figur 1 eine perspektivische Darstellung einer Befestigungseinrichtung mit einer erfindungsgemäßen Führungseinrichtung;

Figur 2die Befestigungseinrichtung aus Figur 1 in teilweise geschnittener Darstellung;

Figur 3einen Kupplungsgeberzylinder mit einer erfindungsgemäßen Kolbenstange in teilweise geschnittener Darstellung gemäß einem ersten Ausführungsbeispiel;

Figur 4eine Kolbenstange in teilweise geschnittener Darstellung gemäß einem zweiten Ausführungsbeispiel;

Figur 5eine Kolbenstange in teilweise geschnittener Darstellung gemäß einem dritten Ausführungsbeispiel;

Figur 6eine Kolbenstange in teilweise geschnittener Darstellung gemäß einem vierten Ausführungsbeispiel;

Figur 7eine Kolbenstange in teilweise geschnittener Darstellung gemäß einem fünften Ausführungsbeispiel;

Figur 8eine Kolbenstange in teilweise geschnittener Darstellung gemäß einem sechsten Ausführungsbeispiel und

Figur 9einen Kupplungsgeberzylinder mit einer Kolbenstange gemäß einem siebten Ausführungsbeispiel im Längsschnitt.

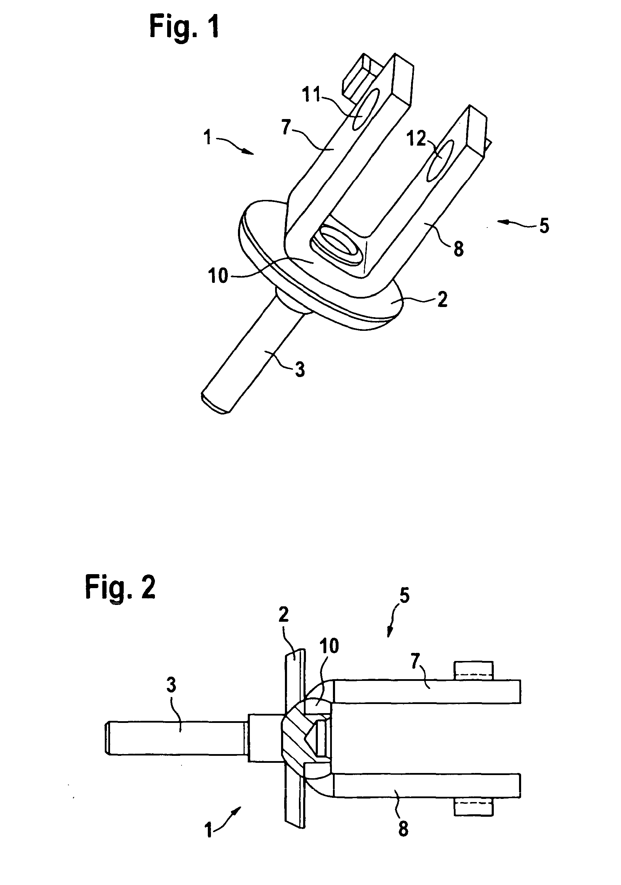

In den Figuren 1 und 2 ist eine Befestigungseinrichtung 1 perspektivisch dargestellt, die dazu dient, das Ende einer (in Figur 1 nicht dargestellten) Kolbenstange eines Kupplungsgeberzylinders an einem (in Figur 1 ebenfalls nicht dargestellten) Kupplungspedal zu befestigen. Die Befestigungseinrichtung 1, die auch als Kolbenstangenauge bezeichnet wird, umfasst eine Scheibe 2, aus deren Mitte sich auf einer Seite ein im Wesentlichen kreiszylinderförmiger Führungsstift 3 koaxial zu der Scheibe 2 erstreckt. Auf der anderen Seite der Scheibe 2 ist, zum Beispiel mit Hilfe einer Nietverbindung, ein im Wesentlichen U-förmiger Halter 5 befestigt, der zwei parallele Schenkel 7 und 8 aufweist, die durch eine Basis 10 miteinander verbunden sind, die an der Scheibe 2 befestigt ist. In den freien Enden der Schenkel 7 und 8 ist jeweils ein Durchgangsloch 11 und 12 ausgespart, das zur Aufnahme eines (nicht dargestellten) Befestigungsbolzens dient, mit dem das Kupplungspedal an dem U-förmigen Halter 5 befestigbar ist.

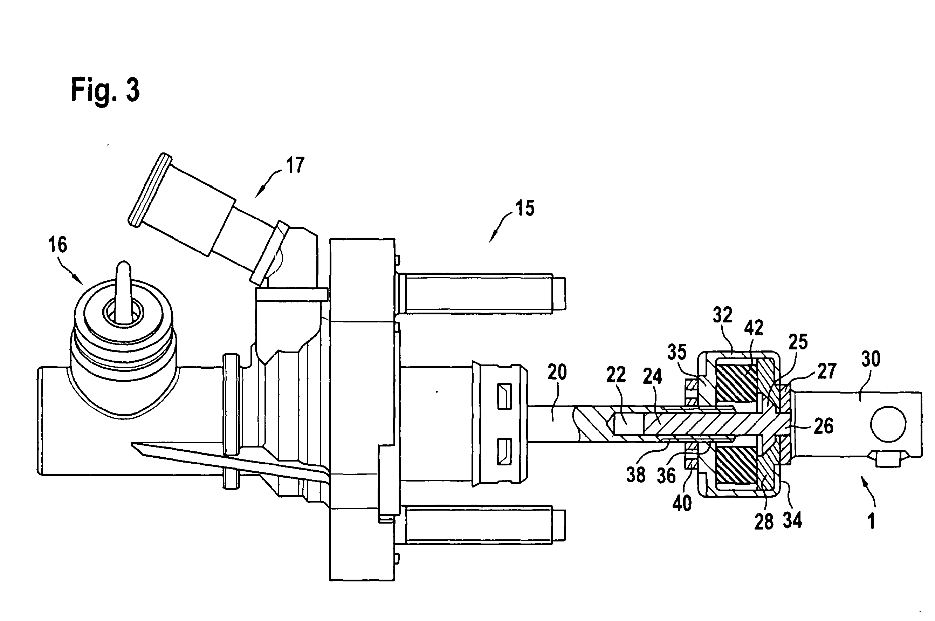

In Figur 3 ist ein Kupplungsgeberzylinder 15 eines hydraulischen Ausrücksystems für eine (nicht dargestellte) Reibungskupplung eines Kraftfahrzeugs dargestellt. Der Kupplungsgeberzylinder 15 weist einen Druckanschluss 16 auf, an den eine Hydraulikdruckleitung anschließbar ist, über die der Kupplungsgeberzylinder 15 mit einem (nicht dargestellten) Kupplungsnehmerzylinder verbindbar ist. Außer weist der Kupplungsgeberzylinder 15 einen Anschluss 17 für eine Hydraulikleitung auf, über die der Kupplungsgeberzylinder 15 an einen Behälter mit Hydraulikflüssigkeit, insbesondere Bremsflüssigkeit, verbindbar ist. Im Inneren des Kupplungsgeberzylinders 15 ist ein mit Hydraulikdruck beaufschlagter Kolben hin und her bewegbar aufgenommen, an dem eine Kolbenstange 20 befestigt ist, die aus dem Kupplungsgeberzylinder 15 hinausragt.

Die Kolbenstange 20 weist an ihrem freien Ende ein zentrales Sackloch 22 auf, in dem ein Ende eines im Wesentlichen kreiszylinderförmigen Führungsstifts 24 in Längsrichtung der Kolbenstange 20 verschiebbar geführt ist. An dem anderen Ende des Führungsstifts 24 ist ein Bund 25 ausgebildet, der sich außen kegelstumpfartig verjüngt. Der sich außen kegelstumpfartig verjüngende Bund 25 geht in einen Gewindebolzen 26 über, der auf der dem Kupplungsgeberzylinder 15 abgewandten Seite des Bundes zentral vorsteht. Der Gewindebolzen 26 ist mit einem Außengewinde ausgestattet, das mit einem komplementär ausgebildeten Innengewinde zusammenwirkt, das an einem zentralen Durchgangsloch einer Gewinderingscheibe 27 ausgebildet ist, die einstückig mit einem U-förmigen Halter 30 verbunden ist, der zu einer ähnlichen Befestigungseinrichtung 1 gehört, wie sie in den Figuren 1 und 2 dargestellt ist. Zwischen dem Bund 25 und der Gewinderingscheibe 27 ist eine Anschlagscheibe 28 eingeklemmt, die radial innen komplementär zu dem Bund 25 ausgebildet ist. Durch die Klemmverbindung und die Verschraubung sind der Führungsstift 24, die Anschlagringscheibe 28 und der U-förmige Halter 30 fest miteinander verbunden. Der Führungsstift 24, die Anschlagscheibe 28 und der U-förmige Halter 30 sind vorzugsweise aus Stahl gebildet.

Radial außerhalb der Anschlagscheibe 28 erstreckt sich ein im Wesentlichen kreiszylindermantelförmiges Dämpfergehäuse 32, das vorzugsweise als fließgepresstes Aluminiumteil ausgebildet ist. Das Dämpfergehäuse 32 ist koaxial zu der Kolbenstange 20 angeordnet und weist an seiner dem Kupplungsgeberzylinder 15 abgewandten Seite einen zum Beispiel umgebördelten Rand 34 auf, der außen an der Anschlagringscheibe 28 anliegt. Die Abmessungen und Toleranzen sind so gewählt, dass sich die Anschlagscheibe 28 zusammen mit dem Führungsstift 24 und dem U-förmigen Halter 30 relativ zu der Kolbenstange 20 bewegen kann und umgekehrt. Die Bewegung der Anschlagscheibe 28 in axialer Richtung wird durch das Dämpfergehäuse 32 begrenzt.

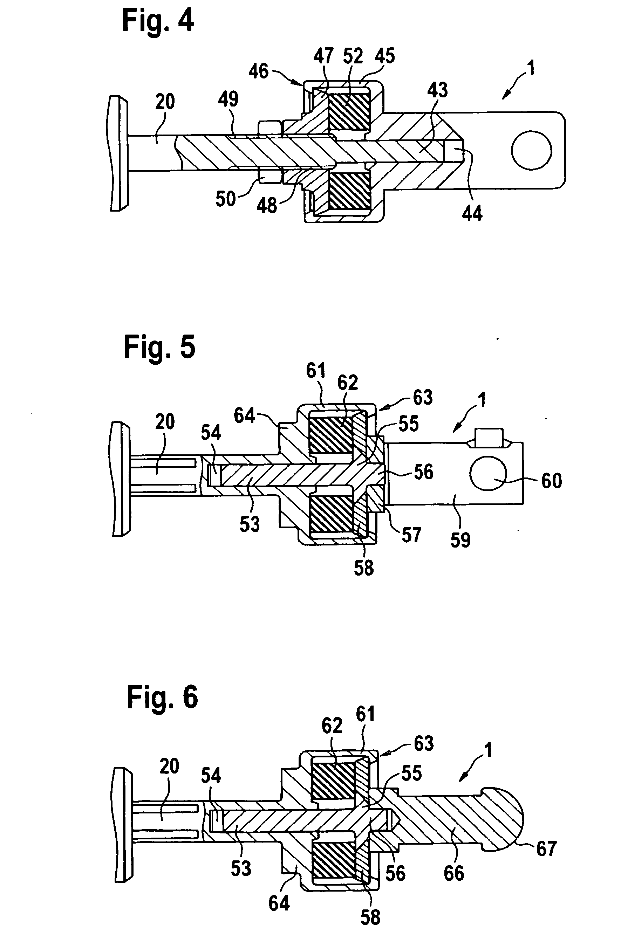

Auf der dem Kupplungsgeber 15 zugewandten Seite weist das Dämpfergehäuse 32 einen Boden 35 auf, der im Wesentlichen die Gestalt einer Kreisringscheibe hat, die einstückig mit dem Dämpfergehäuse 32 verbunden ist. Der Boden 35 weist ein zentrales Durchgangsloch 36 auf, das mit einem Innengewinde ausgestattet ist, das mit einem komplementären Außengewinde 38 zusammenwirkt, das an dem freien Ende der Kolbenstange 20 ausgebildet ist. Das Dämpfergehäuse 32 ist auf das freie Ende der Kolbenstange 20 aufgeschraubt. Durch Verdrehen des Dämpfergehäuses kann die Länge der Kolbenstange 20 beziehungsweise der Kombination aus der Kolbenstange 20 und der Befestigungseinrichtung 1 verstellt werden. Mit Hilfe einer Kontermutter 40, die zwei Durchgangslöcher zum Ansetzen eines (nicht dargestellten) Werkzeugs aufweist, kann das Dämpfergehäuse 32 in Längsrichtung an der Kolbenstange 20 fixiert werden. In dem Dämpfergehäuse 32 ist ein Ringraum ausgebildet, durch den der Führungsstift 24 hindurch ragt. In dem Ringraum ist eine Dämpferringscheibe 42 angeordnet, die einen rechteckförmigen Querschnitt aufweist und aus Gummi gebildet ist. Die Dämpferscheibe 42 ist in axialer Richtung zwischen dem Boden 35 des Dämpfergehäuses 32 und dem Anschlagring 28 eingeklemmt. Die Dämpferscheibe 42 dient dazu, Axialschwingungen der Kolbenstange 20 zu dämpfen. Die Anbindung der Befestigungseinrichtung 1 an das freie Ende der Kolbenstange 20 ist bei dem in Figur 3 dargestellten Ausführungsbeispiel und den folgenden in den Figuren 5 und 6 dargestellten Ausführungsbeispielen so gestaltet, dass sich die Kolbenstange 20 zusammen mit dem Dämpfergehäuse auf die Befestigungseinrichtung 1 zu bewegen kann, wobei die Dämpferscheibe 42 komprimiert wird.

Bei dem in Figur 4 dargestellten Ausführungsbeispiel ist an dem freien Ende der Kolbenstange 20 ein Führungsstift 43 ausgebildet, der koaxial zu der Kolbenstange 20 verläuft. Die Kolbenstange 20 mit dem einstückig daran ausgebildeten Führungsstift 43 ist vorzugsweise aus Stahl gebildet. Der Führungsstift 43, der im Wesentlichen kreiszylinderförmig ausgebildet ist, ist in einem Sackloch 44 in axialer Richtung geführt, das in einer Befestigungseinrichtung 1 ausgespart ist, die aus Kunststoff gebildet ist. Ein Dämpfergehäuse 45 ist einstückig mit der Befestigungseinrichtung 1 verbunden. Das Dämpfergehäuse 45 ist mit Hilfe einer Schnappverbindung 46 mit einer Fixierscheibe 47 verbunden, die den Boden des Dämpfergehäuses 45 bildet. Die Fixierscheibe 47 weist ein zentrales Durchgangsloch mit einem Innengewinde 48 auf, das mit einem Außengewinde 49 zusammenwirkt, das an der Kolbenstange 20 ausgebildet ist. Durch die miteinander kämmenden Gewinde 48 und 49 wird gewährleistet, dass die Länge der Kolbenstange 20 beziehungsweise der Kombination der Kolbenstange mit der Befestigungseinrichtung 1 variabel eingestellt werden kann. Die Fixierscheibe 47 kann mit Hilfe einer Kontermutter 50 fixiert werden. Im fixierten Zustand ist die Fixierscheibe 47 fest mit der Kolbenstange 20 verbunden. Die Schnappverbindung 46 ist so gestaltet, dass sich Kolbenstange 20 zusammen mit der Fixierscheibe 47 auf die Befestigungseinrichtung 1 zu bewegen kann, wobei eine zwischen der Fixierscheibe 47 und dem Dämpfergehäuse 45 in axialer Richtung eingeklemmte Dämpferscheibe 52 komprimiert wird. Bei der Fixierscheibe 47 handelt es sich um ein Bauteil aus Aluminium oder aus Stahl.

Bei dem in Figur 5 dargestellten Ausführungsbeispiel ist die Kolbenstange 20 aus Kunststoff gebildet. Ein Ende eines Führungsstifts 53 aus Stahl ist in einem zentralen Sackloch 54 in dem freien Ende der Kolbenstange 20 in axialer Richtung hin und her bewegbar geführt. An dem anderen Ende des Führungsstifts 53 ist ein Bund 55 ausgebildet. Im Anschluss an den Bund 55 ist ein Gewindebolzen 56 koaxial zu dem Führungsstift 53 angeordnet. Der Führungsstift 53, der Bund 55 und der Gewindebolzen 56 sind einstückig ausgebildet. Der Gewindebolzen 56 weist ein Außengewinde auf, mit dem er in eine Gewinderingscheibe 57 eingeschraubt ist. Zwischen dem Bund 55, der sich kegelstumpfartig verjüngt, und der Gewinderingscheibe 57 ist eine Anschlagscheibe 58, die radial innen komplementär zu dem Bund 55 ausgebildet ist, eingeklemmt. Die Gewindescheibe 57 gehört zu einem U-förmigen Halter 59, der ein zentrales Durchgangsloch 60 aufweist. Der Aufbau und die Funktion des U-förmigen Halters sind analog wie bei den vorangegangenen Ausführungsbeispielen.

Ein Dämpfergehäuse 61 ist über einen Boden 64 einstückig mit der Kolbenstange 20 verbunden. In dem Dämpfergehäuse 61 ist eine Dämpferscheibe 62 zwischen dem Boden 64 und der Anschlagscheibe 58 eingeklemmt. Das Dämpfergehäuse 61 ist durch eine Schnappverbindung 63 mit der Anschlagscheibe 58 verbunden. Die Schnappverbindung 63 ist so gestaltet, dass sich die Kolbenstange 20 zusammen mit dem Dämpfergehäuse 61 relativ zu der Anschlagscheibe 58 bewegen kann, die fest mit dem Führungsstift 53 und der Befestigungseinrichtung 1 verbunden ist.

Bei dem in Figur 6 dargestellten Ausführungsbeispiel sind die Kolbenstange 20, das Dämpfergehäuse 61, der Führungsstift 53, der Bund 55, die Anschlagscheibe 58, der Gewindebolzen 56, die Schnappverbindung 63 und die Dämpferscheibe 62 genauso ausgebildet wie bei dem in Figur 5 dargestellten Ausführungsbeispiel. Bei dem in Figur 6 dargestellten Ausführungsbeispiel ist lediglich ein anderer Halter 66 auf den Gewindebolzen 56 aufgeschraubt. Der Halter 66 ist aus Stahl gebildet und weist an seinem freien Ende eine halbkugelförmige Kappe 67 auf, die zur Befestigung eines (nicht dargestellten) Kunststoffpedals dient.

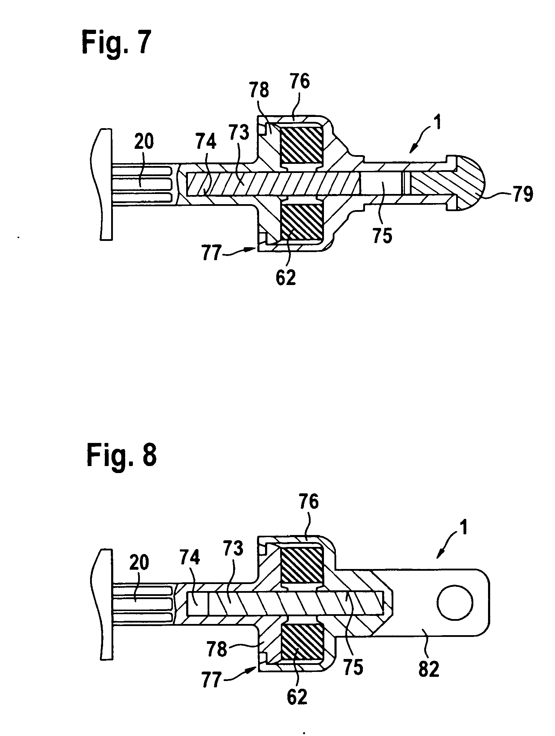

Bei den in den Figuren 7 und 8 dargestellten Ausführungsbeispielen wird ein separater Führungsstift 73 aus Stahl verwendet, um eine axiale Führung der Kolbenstange 20 relativ zu der Befestigungseinrichtung 1 zu gewährleisten. Ein Ende des Führungsstifts 73 ist in einem zentralen Sackloch 74 geführt, das in dem freien Ende der Kolbenstange 20 ausgespart ist. Das andere Ende des Führungsstifts 73 ist in einem zentralen Sackloch geführt, das in der Befestigungseinrichtung 1 ausgespart ist. Ein Dämpfergehäuse 76 ist einstückig mit der Befestigungseinrichtung 1 verbunden. Das Dämpfergehäuse 76 ist mit Hilfe einer Schnappverbindung 77 mit einer Anschlagscheibe 78 verbunden, die einstückig mit der Kolbenstange 20 verbunden ist. Die Kolbenstange 20 ist bei den in den Figuren 7 und 8 dargestellten Ausführungsbeispielen aus Kunststoff gebildet.

Bei den in Figur 7 dargestellten Ausführungsbeispielen ist die Befestigungseinrichtung 1 mit dem Dämpfergehäuse 76 ebenfalls aus Kunststoff gebildet. Allerdings ist an dem freien Ende der Befestigungseinrichtung 1 eine Stahlkappe 79 befestigt, die zur Anbindung eines Kunststoffpedals dient. Durch die Stahlkappe 79 kann der Verschleiß der Kolbenstange im Pedal reduziert werden.

Bei dem in Figur 8 dargestellten Ausführungsbeispiel umfasst die Befestigungseinrichtung 1 einen U-förmigen Halter 82, der dem in den Figuren 1 und 2 dargestellten Halter 5 ähnelt. Der U-förmige Halter 82 ist aus Stahlblech gebildet. Der U-förmige Halter 82 ist einstückig mit dem Dämpfergehäuse 76 ausgebildet und kann auch aus Kunststoff oder aus Aluminiumblech gebildet sein.

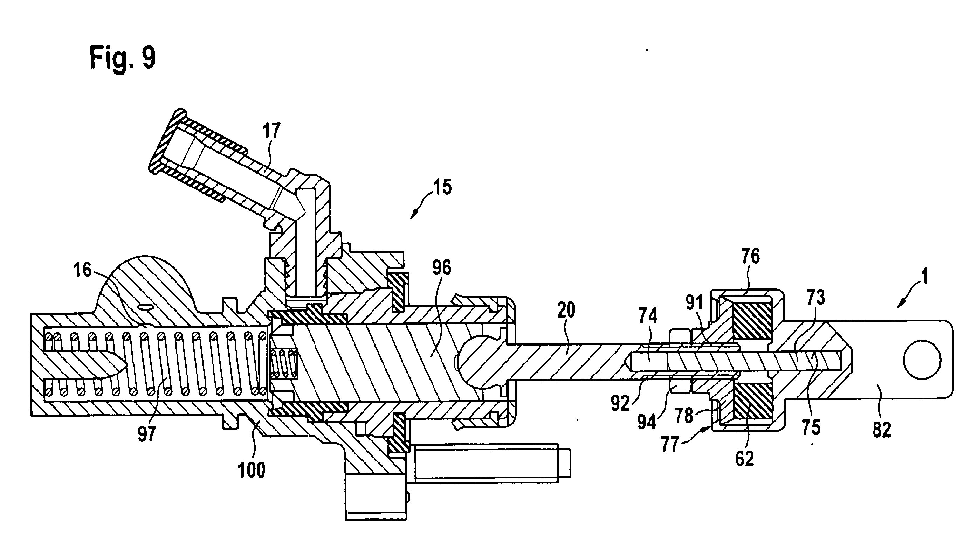

Bei dem in Figur 9 dargestellten Ausführungsbeispiel ist die Anschlagscheibe 78 nicht einstückig mit der Kolbenstange 20, sondern als separates Bauteil ausgebildet. Die Anschlagscheibe 78 weist ein zentrales Durchgangsloch mit einem Innengewinde 91 auf, das mit einem Außengewinde 92 kämmt, das an dem freien Ende der Kolbenstange 20 ausgebildet ist. Die Anschlagscheibe 78 wird mit Hilfe einer Kontermutter 94 an der Kolbenstange 20 fixiert. Die Befestigungseinrichtung 1 des in Figur 9 dargestellten Ausführungsbeispiels entspricht der Befestigungseinrichtung 1 des in Figur 8 dargestellten Ausführungsbeispiels.

In der Schnittdarstellung der Figur 9 sieht man, dass ein Kolben 96 gegen die Wirkung einer Schraubendruckfeder 97 in dem Kupplungsgeberzylinder 15 hin und her bewegbar aufgenommen ist. An den Kolben 96 ist die Kolbenstange 20 angelenkt. Der Kupplungsgeberzylinder 15 weist ein Gehäuse 100 auf, das hohlzylindrisch gestaltet ist. Zur Betätigung des Kupplungsgeberzylinders 15 dient ein (nicht dargestelltes) Kupplungspedal, dessen manuelle Betätigung eine Stellbewegung auslöst, die von der Kolbenstange 20 auf den Kolben 96 übertragen wird.

### Bezugszeichenliste

- 1.: Befestigungseinrichtung
- 2.: Scheibe
- 3.: Führungsstift
- 4.: -
- 5.: U-förmiger Halter
- 6.: -
- 7.: Schenkel
- 8.: Schenkel
- 9.: -
- 10.: Basis
- 11.: Durchgangsloch
- 12.: Durchgangsloch
- 13.: -
- 14.: -
- 15.: Kupplungsgeberzylinder
- 16.: Druckanschluss
- 17.: Anschluss für Hydraulikleitung
- 18.: -
- 19.: -
- 20.: Kolbenstange
- 21.: -
- 22.: zentrales Sackloch
- 23.: -
- 24.: Führungsstift
- 25.: Bund
- 26.: Gewindebolzen
- 27.: Gewinderingscheibe
- 28.: Anschlagringscheibe
- 29.: -
- 30.: U-förmiger Halter
- 31.: -
- 32.: Dämpfergehäuse
- 33.: -
- 34.: gebördelter Rand
- 35.: Boden
- 36.: Durchgangsloch
- 37.: -
- 38.: Außengewinde
- 39.: -
- 40.: Kontermutter
- 41.: -
- 42.: Dämpferscheibe
- 43.: Führungsstift
- 44.: Sackloch
- 45.: Dämpfergehäuse
- 46.: Schnappverbindung
- 47.: Fixierscheibe
- 48.: Innengewinde
- 49.: Außengewinde
- 50.: Kontermutter
- 51.: -
- 52.: Dämpferscheibe
- 53.: Führungsstift
- 54.: zentrales Sackloch
- 55.: Bund
- 56.: Gewindebolzen
- 57.: Gewinderingscheibe
- 58.: Anschlagscheibe
- 59.: U-förmiger Halter
- 60.: Durchgangsloch
- 61.: Dämpfergehäuse
- 62.: Dämpferscheibe
- 63.: Schnappverbindung
- 61.: 64. Boden
- 65.: Gewindesackloch
- 66.: Halter
- 67.: kugelförmige Kappe
- 68.: -
- 69.: -
- 70.: -
- 71.: -
- 72.: -
- 73.: Führungsstift (separat)
- 74.: Sackloch
- 75.: Sackloch
- 76.: Dämpfergehäuse
- 77.: Schnappverbindung
- 78.: Anschlagscheibe
- 79.: Kappe
- 80.: -
- 81.: -
- 82.: U-förmiger Halter
- 83.: -
- 84.: -
- 85.: -
- 86.: -
- 87.: -
- 88.: -
- 89.: -
- 90.: -
- 91.: Innengewinde
- 92.: Außengewinde
- 93.: -
- 94.: Kontermutter
- 95.: -
- 96.: Kolben
- 97.: Schraubendruckfeder
- 98.: -
- 99.: -
- 100.: Gehäuse

## Patentansprüche

1. Kolbenstange für einen Zylinder (15), insbesondere einen Kupplungsgeberzylinder eines Kraftfahrzeugs, in welchem ein Kolben (96) hin und her bewegbar aufgenommen ist, an dem ein Ende der Kolbenstange (20) angebracht ist, an deren anderem Ende unter Zwischenschaltung einer Schwingungsdämpfungseinrichtung (42;52;62), insbesondere einer Dämpferscheibe, mindestens eine Befestigungseinrichtung (1) vorgesehen ist, die in Längsrichtung und relativ zu der Kolbenstange (20) bewegbar ist und dazu dient, eine Betätigungseinrichtung, insbesondere ein Kupplungspedal, an die Kolbenstange (20) anzubinden, **dadurch gekennzeichnet, dass** die Befestigungseinrichtung (1) durch eine Führungseinrichtung (3;24;43;53;73) in Längsrichtung der Kolbenstange (20) hin und her bewegbar geführt ist.

2. Kolbenstange nach Anspruch 1, **dadurch gekennzeichnet, dass** die Führungseinrichtung einen Führungsstift (3;24;43;53;73) umfasst, der sich durch die Dämpfungseinrichtung (42;52;62) hindurch erstreckt.

3. Kolbenstange nach Anspruch 2, **dadurch gekennzeichnet, dass** der Führungsstift (3;24,43;53;73) einen kreisrunden Querschnitt aufweist.

4. Kolbenstange nach Anspruch 2 oder 3, **dadurch gekennzeichnet, dass** der Führungsstift (3;53) an der Befestigungseinrichtung (1) angebracht und mit seinem freien Ende in einem Führungsloch (54) geführt ist, das in der Kolbenstange (20) vorgesehen ist.

5. Kolbenstange nach Anspruch 2 oder 3, **dadurch gekennzeichnet, dass** der Führungsstift (43) an der Kolbenstange (20) angebracht und mit seinem freien Ende in einem Führungsloch (44) geführt ist, das in der Befestigungseinrichtung (1) vorgesehen ist.

6. Kolbenstange nach Anspruch 2 oder 3, **dadurch gekennzeichnet, dass** in dem freien Ende der Kolbenstange (20) ein Führungsloch (74) ausgespart ist, in welchem ein Ende des Führungsstifts (73) geführt ist, dessen anderes Ende in einem Führungsloch (75) geführt ist, das in der Befestigungseinrichtung (1) ausgespart ist.

7. Kolbenstange nach einem der vorhergehenden Ansprüche, **dadurch gekennzeichnet, dass** die Dämpfungseinrichtung (42;52;62) in einem Dämpfungseinrichtungsgehäuse (32;45;61 ;76) angeordnet ist, das dazu dient, die Befestigungseinrichtung (1) an der Kolbenstange (20) so anzubringen, dass eine Relativbewegung zwischen der Kolbenstange 20 und der Befestigungseinrichtung (1) in axialer Richtung möglich ist.

8. Kolbenstange nach Anspruch 7, **dadurch gekennzeichnet, dass** die Befestigungseinrichtung (1) mit Hilfe einer Schnappverbindung (46;63;77), die teilweise an dem Dämpfungseinrichtungsgehäuse (45;61;76) ausgebildet ist, an der Kolbenstange (20) befestigt ist.

9. Kolbenstange nach Anspruch 8, **dadurch gekennzeichnet, dass** das Dämpfungseinrichtungsgehäuse (45;76) von der Befestigungseinrichtung (1) ausgeht und im Wesentlichen die Gestalt eines Kreiszylindermantels aufweist, der einen Bund (47;78) umgreift, der von der Kolbenstange (20) ausgeht.

10. Kolbenstange nach Anspruch 7, **dadurch gekennzeichnet, dass** die Befestigungseinrichtung (1) mit Hilfe einer Schraubverbindung (35,36,38) an der Kolbenstange (20) befestigt ist.

11. Zylinder, insbesondere Kupplungsgeberzylinder eines Kraftfahrzeugs, in welchem ein Kolben (96) hin und her bewegbar aufgenommen ist, an dem ein Ende einer Kolbenstange (20) angebracht ist, an deren anderem Ende unter Zwischenschaltung einer Schwingungsdämpfungseinrichtung (62), insbesondere einer Dämpferscheibe, mindestens eine Befestigungseinrichtung (1) vorgesehen ist, die in Längsrichtung und relativ zu der Kolbenstange (20) bewegbar ist und dazu dient, eine Betätigungseinrichtung, insbesondere ein Kupplungspedal, an der Kolbenstange anzubinden, **gekennzeichnet durch** eine Kolbenstange (20) nach einem der vorhergehenden Ansprüche.

## Claims

1. Piston rod for a cylinder (15), in particular a clutch master cylinder of a motor vehicle in which a piston (96) is accommodated so that it can move back and forth, to which one end of the piston rod (20) is attached, at the other end of which, with a vibration damping device (42, 52, 62) interposed, in particular a damping disk, at least one attaching device (1) is provided which is movable in the longitudinal direction and relative to the piston rod (20), and which serves to link an actuating mechanism, in particular a clutch pedal, to the piston rod (20), **characterized in that** the attaching device (1) is guided by a guide device (3, 24, 43, 53, 73) so that it is movable back and forth in the longitudinal direction of the piston rod (20).

2. Piston rod according to Claim 1, **characterized in that** the guide device includes a guide pin (3, 24, 43, 53, 73) that extends through the damping device (42, 52, 62).

3. Piston rod according to Claim 2, **characterized in that** the guide pin (3, 24, 43, 53, 73) has a circular cross section.

4. Piston rod according to Claim 2 or 3, **characterized in that** the guide pin (3, 53) is attached to the attaching device (1) and its free end is guided in a guide hole (54) that is provided in the piston rod (20).

5. Piston rod according to Claim 2 or 3, **characterized in that** the guide pin (43) is attached to the piston rod (20) and its free end is guided in a guide hole (44) that is provided in the attaching device (1).

6. Piston rod according to Claim 2 or 3, **characterized in that** a guide hole (74) is left free in the free end of the piston rod (20), in which one end of the guide pin (73) is guided, the other end of which is guided in a guide hole (75) that is left free in the attaching device (1).

7. Piston rod according to one of the preceding claims, **characterized in that** the damping device (42, 52, 62) is situated in a damping device housing (32, 45, 61, 76) which serves to attach the attaching device (1) to the piston rod (20) in such a way that a relative motion between the piston rod 20 and the attaching device (1) in the axial direction is possible.

8. Piston rod according to Claim 7, **characterized in that** the attaching device (1) is attached to the piston rod with the help of a snap-on connection (46, 63, 77) which is partially formed on the damping device housing (45, 61, 76).

9. Piston rod according to Claim 8, **characterized in that** the damping device housing (45, 76) proceeds from the attaching device (1) and has essentially the shape of a round cylinder jacket which encompasses a flange (47, 78) that extends from the piston rod (20).

10. Piston rod according to Claim 7, **characterized in that** the attaching device (1) is attached to the piston rod (20) with the help of a threaded connection (35, 36, 38).

11. Cylinder, in particular a clutch master cylinder of a motor vehicle, in which a piston (96) is accommodated so that it can move back and forth, to which one end of a piston rod (20) is attached, at the other end of which, with a vibration damping device (62) interposed, in particular a damping disk, at least one attaching device (1) is provided which is movable in the longitudinal direction and relative to the piston rod (20), and which serves to link an actuating mechanism, in particular a clutch pedal, to the piston rod (20), **characterized by** a piston rod (20) according to one of the preceding claims.

## Revendications

1. Tige de piston pour un cylindre (15), plus particulièrement un cylindre d'émission d'embrayage d'un véhicule automobile, dans lequel un piston (96) est logé de façon à pouvoir effectuer des mouvements de va-et-vient, auquel est fixée une extrémité de la tige de piston (20) dont l'autre extrémité est reliée, par l'intermédiaire d'un dispositif amortisseur de vibrations (42, 52, 62), plus particulièrement un disque amortisseur, à au moins un dispositif de fixation (1) pouvant effectuer des mouvements en direction axiale et par rapport à la tige de piston (20) et qui sert à attacher un dispositif d'actionnement, plus particulièrement une pédale d'embrayage, à la tige de piston (20), **caractérisée en ce que** le dispositif de fixation (1) est guidé par un dispositif de guidage (3, 24, 43, 53, 73) dans la direction axiale de la tige de piston (20) de façon à pouvoir effectuer des mouvements de va-et-vient.

2. Tige de piston selon la revendication 1, **caractérisée en ce que** le dispositif de guidage entoure une goupille de guidage (3, 24, 43, 53, 73) qui traverse le dispositif amortisseur (42, 52, 62).

3. Tige de piston selon la revendication 2, **caractérisée en ce que** la goupille de guidage (3, 24, 43, 53, 73) présente une section circulaire.

4. Tige de piston selon la revendication 2 ou 3, **caractérisée en ce que** la goupille de guidage (3, 53) est fixée au dispositif de fixation (1) et que son extrémité libre est guidée dans un trou de guidage (54) prévu dans la tige de piston (20).

5. Tige de piston selon la revendication 2 ou 3, **caractérisée en ce que** la goupille de guidage (43) est fixée à la tige de piston (20) et que son extrémité libre est guidée dans un trou de guidage (44) prévu dans le dispositif de fixation (1).

6. Tige de piston selon la revendication 2 ou 3, **caractérisée en ce que**, dans l'extrémité libre de la tige de piston (20), un trou de guidage (74) est ménagé, dans lequel est guidée une extrémité de la goupille de guidage (73) dont l'autre extrémité est guidée dans un trou de guidage (75) ménagé dans le dispositif de fixation (1).

7. Tige de piston selon l'une des revendications précédentes, **caractérisée en ce que** le dispositif amortisseur (42, 52, 62) est disposé dans un boîtier de dispositif amortisseur (32, 45, 61, 76) servant à monter le dispositif de fixation (1) sur la tige de piston (20) de façon à rendre possible un mouvement relatif entre la tige de piston (20) et le dispositif de fixation (1) en direction axiale.

8. Tige de piston selon la revendication 7, **caractérisée en ce que** le dispositif de fixation (1) est fixé à la tige de piston (20) à l'aide d'un raccord à encliquetage (46, 63, 77) réalisé en partie sur le boîtier du dispositif amortisseur (45, 61, 76).

9. Tige de piston selon la revendication 8, **caractérisée en ce que** le boîtier du dispositif amortisseur (45, 76) part du dispositif de fixation (1) et présente pour l'essentiel la forme d'un corps rond de cylindre qui entoure un collet (47, 78) partant de la tige de piston (20).

10. Tige de piston selon la revendication 7, **caractérisée en ce que** le dispositif de fixation (1) est fixé à la tige de piston (20) à l'aide d'un assemblage vissé (35, 36, 38).

11. Cylindre, plus particulièrement cylindre d'émission d'embrayage d'un véhicule automobile, dans lequel un piston (96) est logé de façon à pouvoir effectuer des mouvements de va-et-vient, auquel est fixée une extrémité de la tige de piston (20) dont l'autre extrémité est reliée, par l'intermédiaire d'un dispositif amortisseur de vibrations (62), plus particulièrement un disque amortisseur, à au moins un dispositif de fixation (1) pouvant effectuer des mouvements en direction axiale et par rapport à la tige de piston (20) et qui sert à attacher un dispositif d'actionnement, plus particulièrement une pédale d'embrayage, à la tige de piston, **caractérisé par** une tige de piston (20) selon l'une des revendications précédentes.
